# EUROPEAN PATENT SPECIFICATION

(11) **EP 1 416 656 B1**
(45) Date of publication and mention of the grant of the patent: **08.01.2014**
(21) Application number: 03023973.5
(22) Date of filing: 22.10.2003
(51) Int. Cl.: H04J 3/16, H04J 3/04

(54) **Transceiver system and method supporting variable rates and multiple protocols**
Verfahren und Sende-Empfänger-Vorrichtung zur Unterstützung veränderlicher Bitraten und mehrerer Protokolle
Méthode et dispostif de transmission-réception afin de supporter des débits variables et plusieurs protocols

(30) Priority: 01.11.2002 US 423070 P; 31.01.2003 US 355472
(43) Date of publication of application: 06.05.2004
(73) Proprietor: Broadcom Corporation, Irvine, CA 92617 (US)
(72) Inventor: Vikram,Natarajan, Trabuco Canyon, CA 92679 (US); Xiao, Kang, Irvine, CA 92606 (US); Caresosa, Mario, Rancho Santa Margarita, CA 92688 (US); Proano, Jay, Rancho Santa Margarita, CA 92688 (US); Chung, David, Newport Beach, CA 92660 (US); Momtaz, Afshin, Irvine, California 92612 (US); Stolaruk, Randy, Huntingdon Beach, CA 92646 (US); Wang, Xin, Irvine, California 92602 (US); Kocaman, Namik, Irvine, CA 92602 (US)
(74) Representative: Jehle, Volker Armin

(56) References cited:
- US-A1- 2001 014 104
- US-A1- 2002 159 473

## Description

### BACKGROUND OF THE INVENTION

The present invention relates to Optical Internetworking, and more particularly to a multi-rate transceiver with Rate Adaptation.

Synchronous Optical Networking (SONET) is a standard way to multiplex high-speed traffic from multiple vendors' multiplexers onto fiber optic cabling. SONET equipment and software enable network providers to carry traffic from many types of customer equipment in a uniform way on backbone fiber optic cabling.

SONET is slightly different in the long haul space compared to the metro space. SONET for the metro space provides additional functionality for other protocols, such as Gigabit Ethernet, ESCON, FIBERCON, Fiber Channel 2X, and HDTV, to name a few.

Service providers provide services to various customers by provisioning a line card for the customer. Line cards handle one of a several standard rates. TABLE 1 identifies a list of different rates. In order to provide customers with different data rates, service providers install different line cards, wherein each line card handles a different data rate. In cases where a service provider has many customers, it is likely that the service provider has many line cards to accommodate the different user requirements. However, in cases where a service provider has fewer customers, it is likely that the service provider will need to purchase a new line card to accommodate a new customer with different rate requirements.

Accordingly it would be advantageous to provide a more flexible scheme for accommodation of the varying user requirements. Further limitations and disadvantages of connection and traditional approaches will become apparent to one of skill in the art, through comparison of such systems with embodiments of the present invention as set forth in the remainder of the present application.
US 6, 188, 701 B discloses an apparatus for converting DS3 frames to STS1.

### BRIEF SUMMARY OF THE INVENTION

A highly integrated variable rate transceiver/mapper operating at a plurality of data rates is presented herein. The transceiver device has an integrated serial clock and data recovery (CDR) circuit, loss-of-signal (LOS) detection circuitry, performance monitoring, and a number of other advanced features.

These and other advantages and novel features of the present invention, as well as details of an illustrated embodiment thereof, will be more fully understood from the following description and drawings.
As an example suitable to understand the invention a method for transmitting data comprises:
receiving data at a first data rate;
mapping said data to a second data rate; and
transmitting data mapped to the second data rate.
Advantageously said first rate comprises a rate selected from SONET, Gigabit Ethernet, OC-3, OC-12, and OC-48.
Advantageously said second rate is lower than the first rate.
Advantageously said method further comprising:
deserializing the data received at the first rate; and
serializing the data transmitted at the second rate.
Advantageously said method further comprising:
generating frames comprising said data.
As another example to understand the invention a transceiver for transmitting data comprises:
a first interface for receiving data at a first data rate;
a mapper for mapping said data to a second data rate; and
a second interface for transmitting data mapped to the second data rate.
Advantageously said transceiver having the first rate comprises a rate selected from SONET, Gigabit Ethernet, OC-3, OC-12, and OC-48.
Advantageously said transceiver having the second rate is lower than the first rate.
Advantageously said transceiver further comprising:
a demultiplexer for deserializing the data received at the first rate; and
a multiplexer serializing the data transmitted at the second rate.
Advantageously said transceiver further comprising:
a framer for generating frames comprising said data.
Advantageously said transceiver for transmitting data further comprising:
a first interface receiving data at a first data rate;
a mapper connected to the first interface, wherein the mapper maps said data to a second data rate; and
a second interface connected to the mapper, wherein the second interface transmits data mapped to the second data rate.
Advantageously said transceiver with the first rate comprises a rate selected from SONET, Gigabit Ethernet, OC-3, OC-12, and OC-48.
Advantageously said transceiver comprises the second rate is lower than the first rate.
Advantageously said transceiver further comprising:
a demultiplexer connected to the first interface; and
a multiplexer connected to the second interface.
Advantageously said transceiver further comprising:
a framer connected to the mapper.

### BRIEF DESCRIPTION OF SEVERAL VIEWS OF THE DRAWINGS

**FIGURE 1** is a block diagram of an exemplary data transmission environment wherein the present invention can be practiced;
**FIGURE 2** is a block diagram of an exemplary transceiver in accordance with the present invention;
**FIGURE 3** is a block diagram of the transceiver of FIGURE 2 configured for serial SONET on the optical side, and parallel SONET on the system side;
**FIGURE 4** is a block diagram of the transceiver of FIGURE 2 configured for serial SONET on the optical side and serial SONET on the system side;
**FIGURE 5** is a block diagram of the transceiver of FIGURE 2 configured for serial SONET on the optical side and parallel Gigabit Ethernet on the system side;
**FIGURE 6** is a block diagram of the transceiver of FIGURE 2 configured for serial SONET on the optical side and serial Gigabit Ethernet on the system side;
**FIGURE 7** is a block diagram of the transceiver of FIGURE 2 configured to operate in a bypass mode;
**FIGURE 8** is a block diagram of the transceiver of FIGURE 2 configured to operate in a Gigabit Ethernet retimed mode;
**FIGURE 9** is a block diagram of the transceiver of FIGURE 2 configured to operate in a SONET retimed mode;
**FIGURE 10** is a block diagram mapping OC-3 to OC-48 in accordance with an embodiment of the present invention; and
**FIGURE 11** is a block diagram mapping OC-12 to OC-48 in accordance with an embodiment of the present invention.

### DETAILED DESCRIPTION OF THE INVENTION

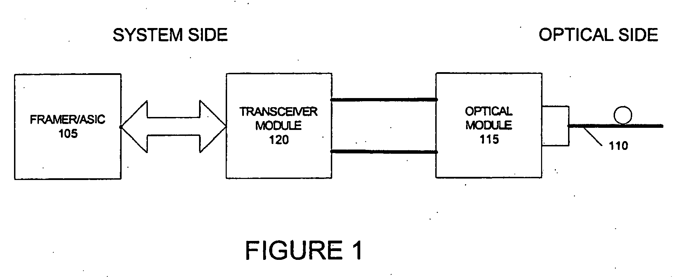

Referring now to **FIGURE 1**, there is illustrated a block diagram of an exemplary data transmission environment wherein the present invention can be practiced. In the data transmission environment, data is bidirectionally transmitted between an Application Specific Integrated Circuit (ASIC) or framer 105 and an optical network 110.

The optical network 110 is connected to an optical module 115. The optical network 115 comprises the electrical to optical interface wherein electronic signals from the ASIC/framer 105 are converted to optical signals for transmission over the optical fiber 110. The optical module 115 also comprises the optical to electrical interface where optical signals from the optical fiber 110 are converted to electrical signals for the ASIC/framer 105.

The optical network 110 comprises various infrastructure. The optical module 115 and optical network 110 form what is generally referred to as the optical side of the data transmission environment. The region comprising the ASIC/framer 105 is referred to as the system side.

The optical side may be configured to transmit and receive data in accordance with any one of a number of different protocols or formats. Exemplary protocols or formats include, Synchronous Optical Networking (SONET), OC-3, 12, 48, Fiber Connectivity (FIBERCON), and Gigabit Ethernet. The system side may also be configured to transmit and receive data in accordance with any of the foregoing protocols or formats.

The present invention proposes a transceiver 120 for adapting the protocol or format of the system side to the protocol or format of the optical side, and vice versa. The transceiver 120 receives data from both the optical side and the system side. The data received from the system side is processed to adapt to the format of the optical side. The data received from the optical side is adapted to the format of the system side. The processing can include serializing, deserializing, mapping, demapping, scrambling, descrambling, and error correction, or any combination thereof.

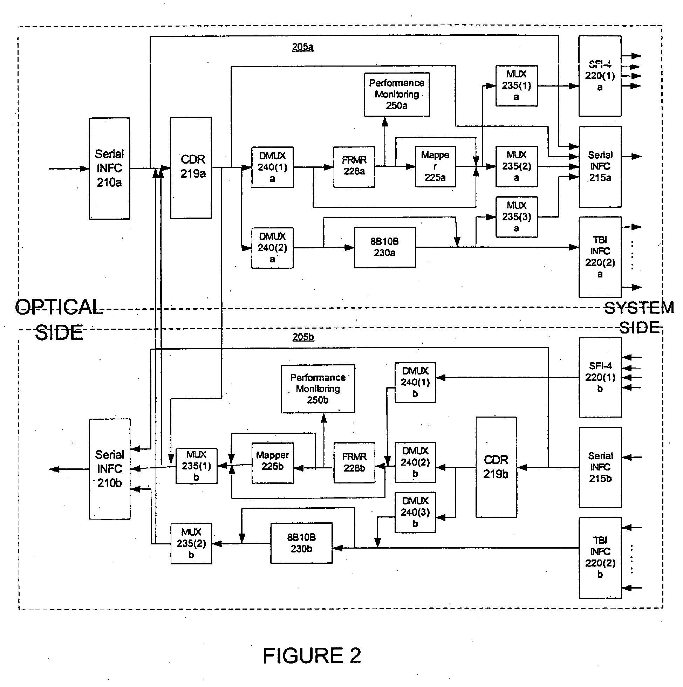

Referring now to **FIGURE 2**, there is illustrated a block diagram of a transceiver 120 in accordance with an embodiment of the present invention. The transceiver 120 can adapt data received from the optical side to the format on the system side and vice versa. Although the embodiment is described with a particular emphasis on Gigabit Ethernet, SONET, and OC-3, 12, and 48, it should be noted that the transceiver 120 is not limited to the foregoing.

The transceiver 120 includes an ingress path 205a and an egress path 205b. The ingress path 205a receives data from the optical side and transmits the data towards the system side, while the egress path 205b receives data from the system side and transmits the data towards the optical side.

Data is transmitted serially on the optical side while the data may be transmitted in either serial or parallel on the system side. Accordingly, the transceiver 120 comprises serial interfaces 210 for transmitting/receiving data to/from the optical side. The transceiver 120 includes both serial interfaces 215, and parallel interfaces 220(1), 220(2) for transmitting/receiving data to/from the system side.

In the present embodiment, the parallel interface 220(1) comprises an interface in accordance with the SFI-4 specification, the parallel interface 220(2) comprises a 10-bit interface (TBI). In an exemplary case, the SFI-4 220 (1) interface can be used to transmit/receive data in accordance with the 4-bit SONET standard. In another exemplary case, the parallel interface 220(2) can be used to transmit/receive data in accordance with the Gigabit Ethernet standard. In another case, the serial interface 215 can be used to transmit/receive data in accordance with either the OC-3, 12 or 48 standard. The serial interface 210 towards the optical side can be configured to transmit data in accordance with either the OC-3, 12, or 48 standard

The ingress path 205a comprises a clock and data recovery unit (CDR) 219a, framer 228a, mapper 225a, encoder/decoder module 230a, multiplexers 235(1)a, 235(2)a, 235(3)a, and demultiplexers 240 (1) a, 240(2)a. The egress path 205b comprises clock and data recovery unit (CDR) 219b, framer 228b, mapper 225b, encoder/decoder module 230b, multiplexers 235(1)b, 235(2)b, 235(3)b, and demultiplexers 240(1)b, 240(2)b. The foregoing are interconnected in both the ingress path 205a and the egress path 205b in a manner, wherein a plurality of selectable paths exist between the optical side and the system side. Switches (not shown) are placed at junctions where multiple segments intersect to allow selection of a particular one of the intersecting segments. A particular path can be selectively realized by appropriate selection by the switches. As will be shown below, utilization of a particular one of the plurality of paths can adapt data received from the optical side for transmission to the system side, and vice versa.

Also included is a bypass path in both the ingress path 205a and the egress path 205b which allows transmission of data directly between the serial interfaces. Additionally, feedback paths can also be provided connecting the egress path to the ingress path, and vice versa. The foregoing feedback paths can be used for testing the transceiver. For example, data can be received by the egress path 205b from the system side and looped back across a feedback path to the ingress path 205a and transmitted to the system side. In certain embodiments, data can be transmitted from SFI-4 interface 220(1)b to SFI-4 interface 220(1)a, TBI interface 220(2)b to TBI interface 220(2)a, or serial interface 215b to serial interface 215a.

Also included are performance monitoring modules 250a, 250b. The performance monitoring modules 250a, 250b detect errors by performing parity checks. The performance monitoring modules 250a, 250b can transmit a report to a user interface within the transceiver module 120, wherein an excessive number of errors are detected.

The operation of the transceiver 120 will now be described in the following exemplary illustrations. It is noted that the foregoing illustrations are by way of example and are not intended to be exhaustive.

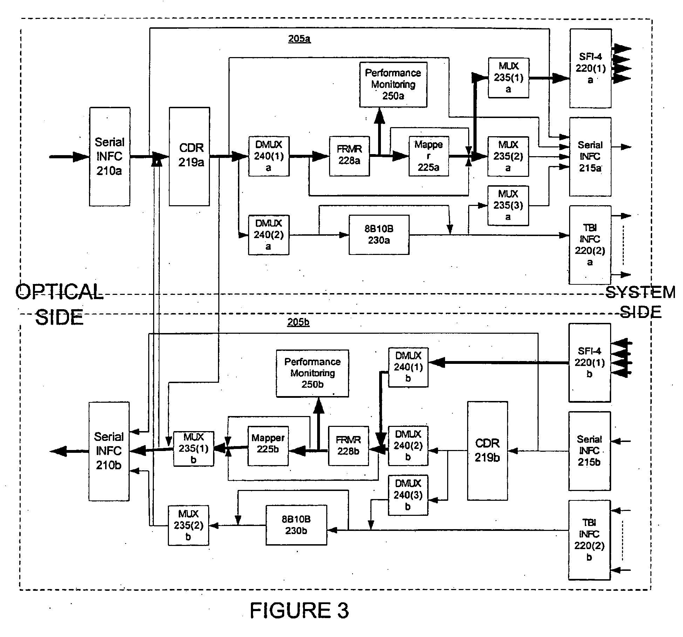

Referring now to **FIGURE 3**, there is illustrated a block diagram of the transceiver of FIGURE 2 configured for serial SONET on the optical side, and parallel SONET on the system side.

Data is received from the system side at the SFI-4 interface 220 (1) b in the egress path 205b. The SFI-4 interface 220 (1) b provides the data to a demultiplexer 240(1)b. The demultiplexer 240(1)b is a 1:4 DEMUX which deserializes the input signal, thereby resulting in 16 bit words. The 16-bit words are provided to a framer 228b. The framer 228b generates frames which are provided to the mapper 225b. The mapper 225b maps the frames to 16 bit words at 155.5 MHz, thereby resulting in an aggregated 2.488 Gbps, or OC-48 signal. The signal from the mapper 225b is provided to a 16:1 multiplexer 235(1)b.

As can be seen from the illustration, a bypass route is included for bypassing the mapper 225b when mapping is not desired. In an alternate embodiment, the framer 228b and mapper 225b can be bypassed, and the data transmitted from the demultiplexer 240(1)b directly to the multiplexer 235(1)b.

The multiplexer 235(1)b serializes the 16-bit words. The multiplexer 235(1)b provides the serialized signal to the serial interface 210b which outputs the 2.488 Gbps signal to the optical side.

The transceiver module 120 receives data from the optical side at the ingress path at serial interface 210a. The serial interface 210a provides the received data to a CDR 219a. The CDR 219a recovers the data and provides a clock signal to demultiplexer 240(1)a. The demultiplexer 240 (1) a is a 1:16 demultiplexer which converts the received data to 16-bit words. The demultiplexer 240(1)a outputs the 16-bit words to framer 228a.

The framer 228a creates frames and transmits the frames to the mapper 225a. The mapper 225a maps the data to a format utilized by the system side. The format can comprise for example OC-3, 12, or 48. The mapper 225a outputs the mapped signal to a 16:4 multiplexer 235(1)a.

As can be seen from the illustration, a bypass route is included for bypassing the mapper 225a when mapping is not desired. In an alternate embodiment, both the framer 228a and mapper 225a can be bypassed, and the data transmitted from the demultiplexer 240 (1) a directly to the multiplexer 235(1)a.

The 16:4 multiplexer 235(1)a outputs four bit words to the SFI-4 interface 220(1)a which provides the four bit words in accordance with 4-bit SONET to the system side.

The CDR 219a is described in greater detail in "Configurable VCO System and Method", Provisional Patent Application, Serial No. 60/423,074, Attorney Docket No. 14109US01, filed November 1, 2002, by Mario Caresosa, Namik Kocaman, and Afshin Momtaz.

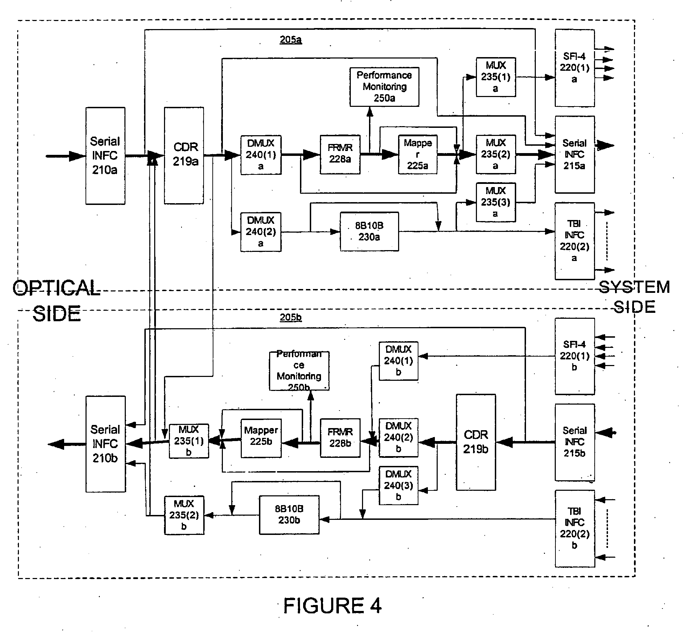

Referring now to **FIGURE 4**, there is illustrated a block diagram of the transceiver of FIGURE 2 configured for serial SONET on the optical side and serial SONET on the system side.

Data is received from the system side at the serial interface 215b in the egress path 205b. The serial interface 215b provides the data to a CDR 219b. The CDR 219b recovers the data and provides a clock signal to demultiplexer 240(2)b. The demultiplexer 240(2)b is a 1:16 DEMUX which deserializes the input signal, thereby resulting in 16 bit words. The 16-bit words are provided to a framer 228b. The framer 228b generates frames which are provided to the mapper 225b. The mapper 225b maps the frames to 16 bit words at 155.5 MHz, thereby resulting in an aggregated 2.488 Gbps, or OC-48 signal. The signal from the mapper 225b is provided to a 16:1 multiplexer 235(1)b.

As can be seen from the illustration, a bypass route is included for bypassing the mapper 225b when mapping is not desired. In an alternate embodiment, both the framer 228b and mapper 225b can be bypassed, and the data transmitted from the demultiplexer 240(2)b directly to the multiplexer 235(1)b.

The multiplexer 235(1)b serializes the 16-bit words. The multiplexer 235(1)b provides the serialized signal to the serial interface 210b which outputs the 2.488 Gbps signal to the optical side.

The transceiver module 120 receives data from the optical side at the ingress path at serial interface 210a. The serial interface 210a provides the received data to a CDR 219a. The CDR 219a recovers the data and provides a clock signal to demultiplexer 240(1)a. The demultiplexer 240(1)a is a 1:16 demultiplexer which converts the received data to 16-bit words. The demultiplexer 240(1)a outputs the 16-bit words to framer 228a. The framer 228a creates frames and transmits the frames to the mapper 225a. The mapper 225a maps the data to a format utilized by the system side. The format can comprise for example OC-3, 12, or 48. The mapper 225a outputs the mapped signal to a 16:1 multiplexer 235(2)a.

As can be seen from the illustration, a bypass route is included for bypassing the mapper 225a when mapping is not desired. In an alternate embodiment, both the framer 228a and mapper 225a can be bypassed, and the data transmitted from the demultiplexer 240 (1) a directly to the multiplexer 235(2)a.

The 16:1 multiplexer 235(2)a outputs serialized data to the serial interface 215a which outputs the serialized data in accordance with serialized SONET to the system side.

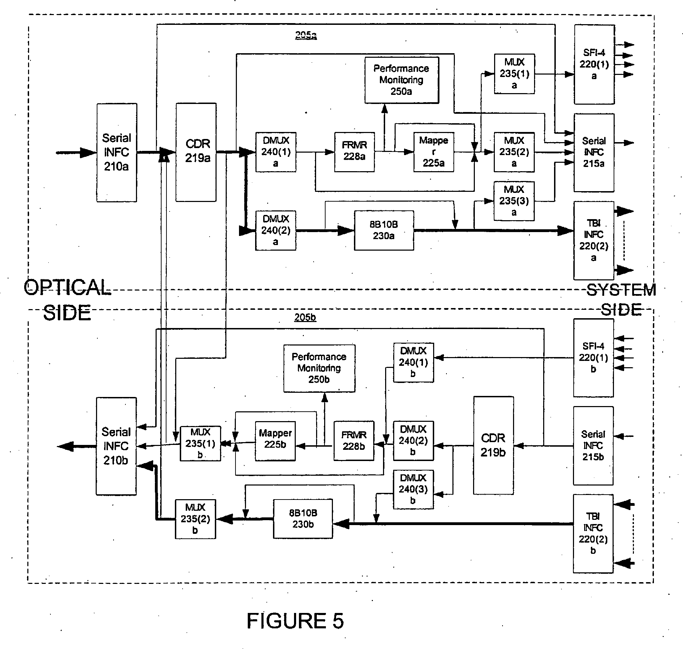

Referring now to **FIGURE 5** there is illustrated a block diagram of the transceiver of FIGURE 2 configured for serial Gigabit Ethernet on the optical side and parallel Gigabit Ethernet on the system side.

Data is received from the system side at TBI interface 220(2)b. The TBI interface provides the data to 8b10b encoder/decoder unit 230b. The encoded signal from the 8b10b 230b is then transmitted to multiplexer 235(2)b. The multiplexer 235(2)b is a 10:1 MUX which serializes the encoded signal and provides the serialized encoded signal to the serial interface 210b. The serial interface 210b outputs the serialized encoded Gigabit Ethernet signal to the optical side.

The transceiver module 120 receives data from the optical side at the ingress path at serial interface 210a. The serial interface 210a provides the received data to a CDR 219a. The CDR 219a recovers the data and provides a clock signal to demultiplexer 240(2)a. The demultiplexer 240(2)a is a 1:10 demultiplexer which converts the received data to 10-bit words. The 10-bit words are provided to the 8b10b encoder/decoder unit 230a. The decoded signal is transmitted by the 8b10b 230a to the TBI Interface 220(2)a. The TBI interface 220(2)a outputs a signal in accordance with the parallel Gigabit Ethernet standard.

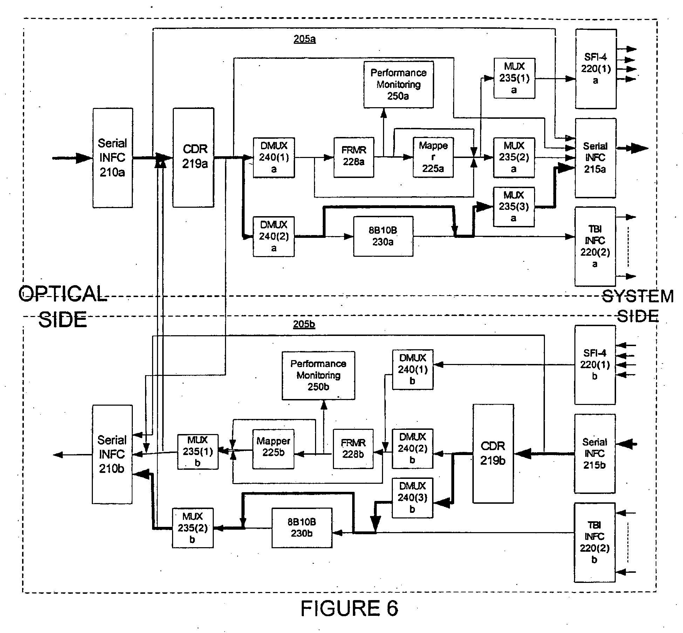

Referring now to **FIGURE 6** there is illustrated a block diagram of the transceiver of FIGURE 2 configured for serial Gigabit Ethernet on the optical side and serial Gigabit Ethernet on the system side.

Data is received from the system side at serial interface 215b. The serial interface 215b provides the data to CDR 219b. The CDR 219b recovers the data and a clock signal and provides the data and clock signal to demultiplexer 240(3)b. The demultiplexer 240(3)b deserializes the data signal resulting in 10 bit words. The 10-bit words bypass the 8b10b encoder/decoder unit 230b and are transmitted to multiplexer 235(2)b. The multiplexer 235(2)b is a 10:1 MUX which serializes the encoded signal and provides the serialized encoded signal to the serial interface 210b. The serial interface 210b outputs the serialized encoded Gigabit Ethernet signal to the optical side.

The transceiver module 120 receives data from the optical side at the ingress path at serial interface 210a. The serial interface 210a provides the received data to a CDR 219a. The CDR 219a recovers the data and provides a clock signal to demultiplexer 240(2)a. The demultiplexer 240(2)a is a 1:10 demultiplexer which converts the received data to 10-bit words. The 10-bit words bypass the 8b10b encoder/decoder unit 230a and are transmitted to multiplexer 235(3)a. The multiplexer 235(3)a serializes the signal and provides the serialized signal to the serial interface 215a. The serial interface 215a outputs the data signal in accordance with the serial Gigabit Ethernet standard.

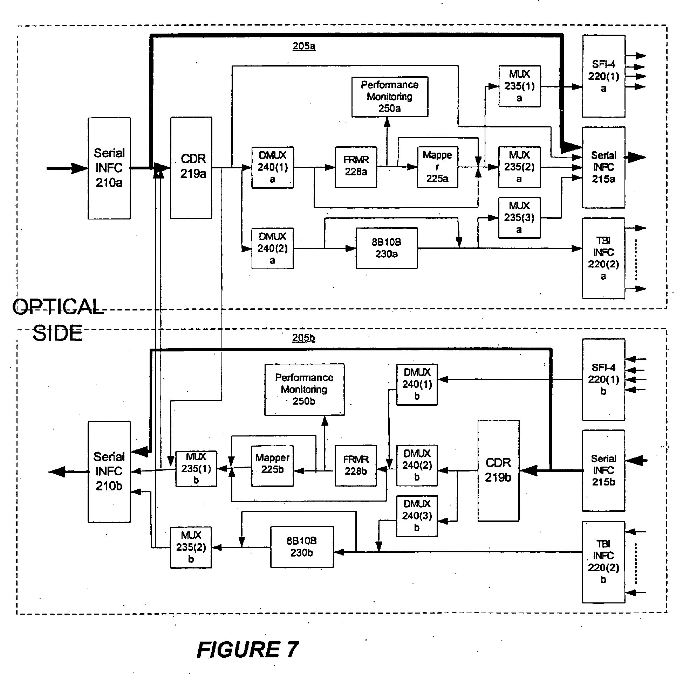

Referring now to **FIGURE 7**, there is illustrated a block diagram of the transceiver of FIGURE 2, configured to operate in a bypass mode. In the bypass mode, data is received from the system side at the serial interface 215b and transmitted directly to the optical side via serial interface 210b. Data received from the optical side is received at serial interface 210a and transmitted directly to serial interface 215a. The bypass mode can be used with any rate.

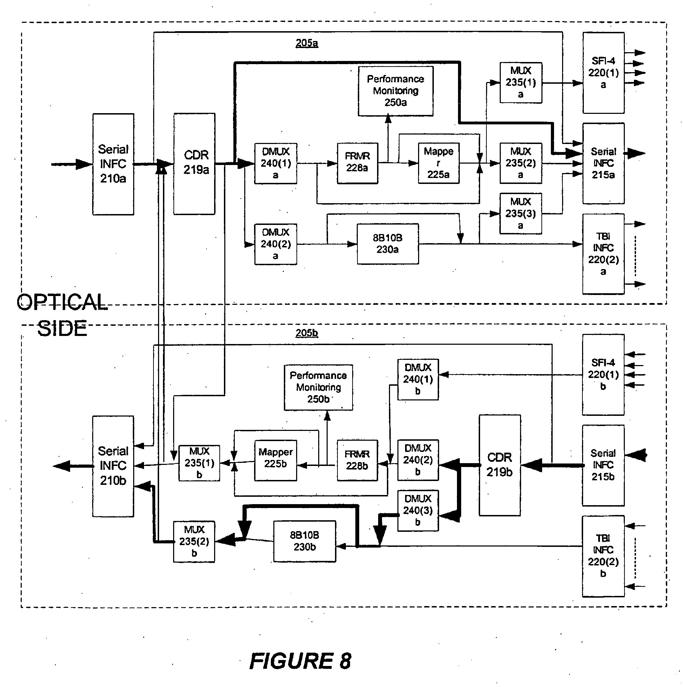

Referring now to **FIGURE 8**, there is illustrated a block diagram of the transceiver of FIGURE 2, configured to operate in a Gigabit Ethernet retimed mode. In the Gigabit Ethernet retimed mode, data is received from the system at the system interface 215b and provided to the CDR 219b. The CDR 219b provides the requisite retiming and outputs the data to the optical side via demultiplexer 240(3)b, bypassing encoder/decoder module 230b, to multiplexer 235(2)b, and serial interface 210b. Data received from the optical side is received at serial interface 210a and provided to CDR 219a. The CDR 219a provides the requisite retiming and transmits the data directly to the serial interface 215a. The serial interface 215a transmits the data to the system side.

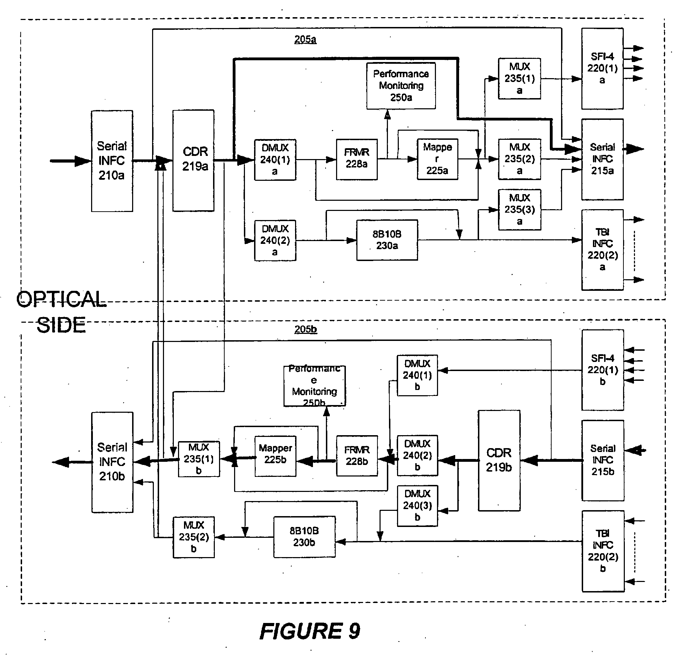

Referring now to **FIGURE 9**, there is illustrated a block diagram of the transceiver of FIGURE 2, configured to operate in a SONET retimed mode. In the SONET retimed mode, data is received from the system side at the serial interface 215b. The serial interface 215b provides the data to a CDR 219b. The CDR 219b recovers the data and provides a clock signal to demultiplexer 240(2)b. The demultiplexer 240(2)b is a 1:16 DEMUX which deserializes the input signal, thereby resulting in 16-bit words. The 16 bit words are provided to a framer 228b. The framer 228b generates frames which are provided to the mapper 225b. The mapper 225b maps the frames to 16-bit words at 155.5 MHz, thereby resulting in 2.488 Gbps, or OC-48. The signal from the mapper 225b is provided to a 16:1 multiplexer 235(1)b and serial interface 210b.

Data received from the optical side is received at serial interface 210a and provided to CDR 219a. The CDR 219a provides the requisite retiming and transmits the data directly to the serial interface 215a. The serial interface 215a transmits the data to the system side.

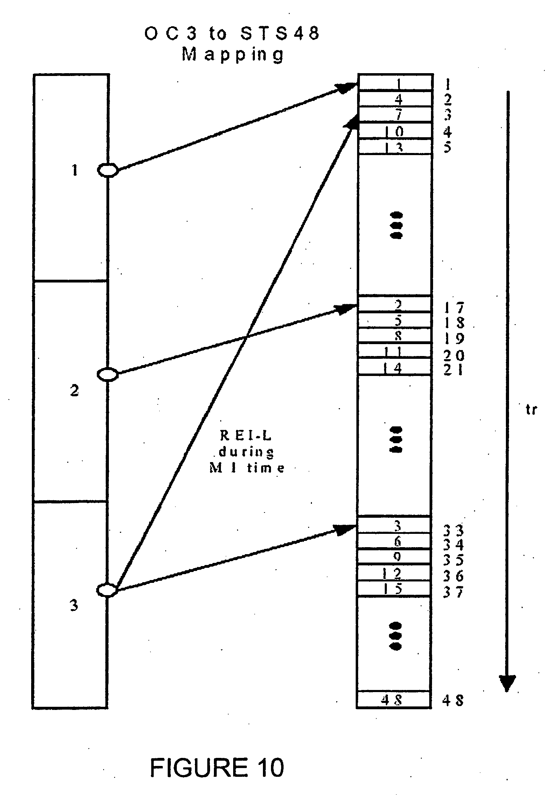

Referring now to **FIGURE 10**, there is a block diagram of OC-3 data mapped onto 16-bit wide data words at 155 MHz in accordance with STS-48. The OC-3 data comprises time slots 1,2,3, while the STS-48 comprises time slots, 1...48. The data from OC-3 time slot 1 is mapped to STS-48 time slot 1. The data from OC-3 time slot 2 is mapped to STS-48 time slot 17. The data from OC-3 time slot 3 is mapped to STS-48 time slots 7 and 33. The remaining STS-48 time slots are filled with 0's or null data.

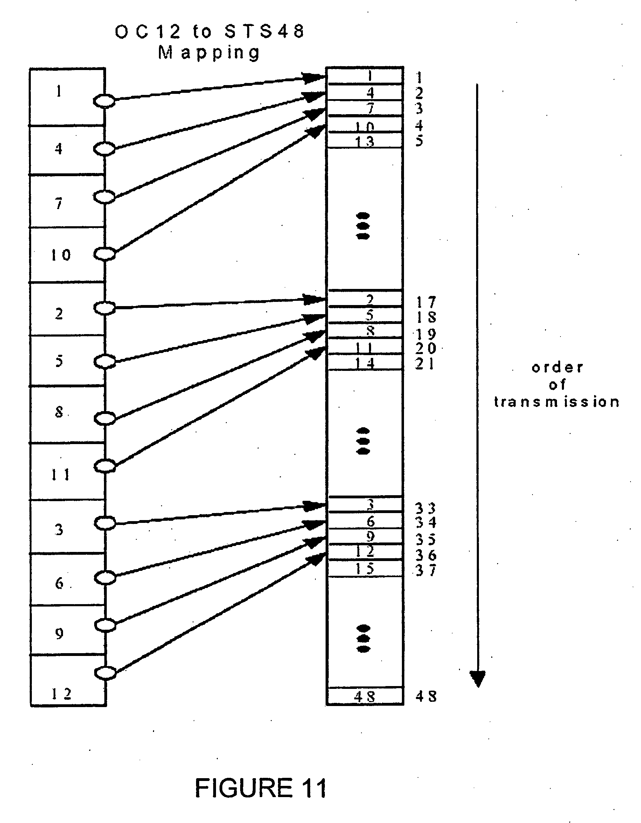

Referring now to **FIGURE 11**, there is a block diagram of OC-12 data mapped onto 16-bit wide data words at 155 MHz in accordance with STS-48. The OC-12 data comprises time slots, 1...12. The time slots, 1...12 are staggered in order. The staggered ordering begins with time slot 1, and is then ordered with every third time slot following, e.g., 4, 7, and 10. The staggered ordering then continues with time slot 2 followed by every third time slot, e.g., 5, 8, and 11. The staggered ordering then continues with time slot 3 followed by every third time slot, e.g., 6, 9, and 12.

The STS-48 data includes 48 time slots which are similarly staggered, e.g., 1, 4, 7, 10,...46, followed by 2, 5, 8,......47, and 3, 6, 9,......48. The data from each OC-12 time slot n is mapped to the corresponding STS-48 time slot n. The remaining STS-48 time slots are filled with 0's or null data.

The transceiver 120 as described herein may be implemented as a board level product, as a single chip, application specific integrated circuit (ASIC), or with varying levels of the transceiver 120 integrated on a single chip with other portions of the system as separate components. The degree of integration of the monitoring system will primarily be determined by the data speeds, and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor can be implemented as part of an ASIC device.

While the invention has been described with reference to certain embodiments, it will be understood by those skilled in the art that various changes may be made without departing from the scope of the invention. In addition, many modifications may be made to adapt particular situation or material to the teachings of the invention without departing from its scope. Therefore, it is intended that the invention not be limited to the particular embodiment(s) disclosed, but that the invention will include all embodiments falling within the scope of the appended claims.

## Claims

1. A method for transmitting data, said method comprising:
receiving data at a first data rate;
mapping said data to a second data rate; and
transmitting data mapped to the second data rate,
**characterized in that**
said mapping is performed by a mapper (225) adapted to map said data from one of a plurality of first data rates to one of a plurality of second data rates, wherein said mapping comprises the steps of filling with fixed data.

2. The method of claim 1, wherein the first rate comprises a rate selected from SONET, Gigabit Ethernet, OC-3, OC-12, and OC-48.

3. The method of claim 2, wherein the second rate is lower than the first rate.

4. The method of claim 1, further comprising:
demultiplexing for deserializing the data received at the first rate; and
multiplexing for serializing the data transmitted at the second rate.

5. The method of claim 1, further comprising:
generating frames comprising said data.

6. The method of claim 1, further comprising:
adapting a first protocol or format of said data to a second protocol or format used for subsequent processing of said data.

7. A transceiver for transmitting data, said transceiver (120) comprising:
a first interface (210, 215, 220) for receiving data at a first data rate;
a mapper (225) for mapping said data to a second data rate; and a second interface (210, 215, 220) for transmitting data mapped to the second data rate,
**characterized in that**
said mapper (225) is configured to map said data from one of a plurality of first data rates to one of a plurality of second data rates, and
said mapper (225) is configured to fill with fixed data.

8. The transceiver of claim 7, further comprising:
a framer (105, 228a, 228b) for generating frames comprising said data which are provided to the mapper (225).

9. The transceiver of claim 7, further comprising:
a demultiplexer (240) for deserializing the data received at the first rate; and
a multiplexer (235) for serializing the data transmitted at the second rate.

10. The transceiver of claim 7, wherein the first rate comprises a rate selected from SONET, Gigabit Ethernet, OC-3, OC-12, and OC-48.

11. The transceiver of claim 7, wherein
a first interface (210, 215, 220) receiving data at a first data rate;
said mapper (225) is connected to the first interface (210, 215, 220), and
the mapper (225) maps said data to said second data rate.

12. The transceiver of claim 7, wherein said second interface (210, 215, 220) is connected to the mapper (225), and
the second interface (210, 215, 220) transmits data mapped to the second data rate.

13. The transceiver of claim 7, wherein said demultiplexer (240) is connected to the first interface (210, 215, 220); and
said multiplexer (235) is connected to the second interface (210, 215, 220).

14. The transceiver of claim 7, wherein said mapper (225) is configured to adapt a first protocol or format of said received data to a second protocol or format used for subsequent processing of said data.

## Patentansprüche

1. Verfahren zum Senden von Daten, wobei das Verfahren umfasst:
- Empfangen von Daten mit einer ersten Datenrate,
- Mappen der Daten auf eine zweite Datenrate und
- Senden auf die zweite Datenrate gemappter Daten,
**dadurch gekennzeichnet, dass**
- das Mappen durch einen Mapper (225) durchgeführt wird, der dafür ausgelegt ist, die Daten von einer Datenrate einer Mehrzahl erster Datenraten auf eine Datenrate einer Mehrzahl zweiter Datenraten zu mappen, wobei das Mappen die Schritte des Füllens mit festen Daten umfasst.

2. Verfahren nach Anspruch 1, wobei die erste Rate eine Rate umfasst, die ausgewählt wird aus SONET, Gigabit-Ethernet, OC-3, OC-12 und OC-48.

3. Verfahren nach Anspruch 2, wobei die zweite Rate niedriger als die erste Rate ist.

4. Verfahren nach Anspruch 1, das ferner umfasst:
- Demultiplexen zum Deserialisieren der mit der ersten Rate empfangenen Daten und
- Multiplexen zum Serialisieren der mit der zweiten Rate gesendeten Daten.

5. Verfahren nach Anspruch 1, das ferner umfasst:
- Generieren von die Daten umfassenden Frames.

6. Verfahren nach Anspruch 1, das ferner umfasst:
- Angleichen eines ersten Protokolls oder Formats der Daten an ein zweites Protokoll oder Format, das zum anschließenden Verarbeiten der Daten verwendet wird.

7. Sende-Empfänger zum Senden von Daten, wobei der Sende-Empfänger (120) umfasst:
- eine erste Schnittstelle (210, 215, 220) zum Empfangen von Daten mit einer ersten Datenrate,
- einen Mapper (225) zum Mappen der Daten auf eine zweite Datenrate und
- eine zweite Schnittstelle (210, 215, 220) zum Senden auf die zweite Datenrate gemappter Daten,
**dadurch gekennzeichnet, dass**
- der Mapper (225) dafür konfiguriert ist, die Daten von einer Datenrate einer Mehrzahl erster Datenraten auf eine Datenrate einer Mehrzahl zweiter Datenraten zu mappen, und
- der Mapper (225) dafür konfiguriert ist, mit festen Daten zu füllen.

8. Sende-Empfänger nach Anspruch 7, der ferner umfasst:
- einen Framer (105, 228a, 228b) zum Generieren von Frames, die die dem Mapper (225) zugeführten Daten umfassen.

9. Sende-Empfänger nach Anspruch 7, der ferner umfasst:
- einen Demultiplexer (240) zum Deserialisieren der mit der ersten Rate empfangenen Daten und
- einen Multiplexer (235) zum Serialisieren der mit der zweiten Rate gesendeten Daten.

10. Sende-Empfänger nach Anspruch 7, wobei die erste Rate eine Rate umfasst, die ausgewählt wird aus SONET, Gigabit-Ethernet, OC-3, OC-12 und OC-48.

11. Sende-Empfänger nach Anspruch 7, wobei
- eine erste Schnittstelle (210, 215, 220) Daten mit einer ersten Datenrate empfängt,
- der Mapper (225) mit der ersten Schnittstelle (210, 215, 220) verbunden ist und
- der Mapper (225) die Daten auf die zweite Datenrate mappt.

12. Sende-Empfänger nach Anspruch 7, wobei
- die zweite Schnittstelle (210, 215, 220) mit dem Mapper (225) verbunden ist und
- die zweite Schnittstelle (210, 215, 220) auf die zweite Datenrate gemappte Daten sendet.

13. Sende-Empfänger nach Anspruch 7, wobei
- der Demultiplexer (240) mit der ersten Schnittstelle (210, 215, 220) verbunden ist, und
- der Multiplexer (235) mit der zweiten Schnittstelle (210, 215, 220) verbunden ist.

14. Sende-Empfänger nach Anspruch 7, wobei der Mapper (225) dafür konfiguriert ist, ein erstes Protokoll oder Format der empfangenen Daten an ein zweites Protokoll oder Format anzugleichen, das zum anschließenden Verarbeiten der Daten verwendet wird.

## Revendications

1. Procédé de transmission de données, ledit procédé comprenant :
la réception de données à un premier débit de données ;
le mappage desdites données à un deuxième débit de données ; et
la transmission des données mappées au deuxième débit de données,
**caractérisé en ce que**
ledit mappage est effectué par un dispositif de mappage (225) adapté à mapper lesdites données d'un parmi une pluralité de premiers débits de données à un parmi une pluralité de deuxièmes débits de données, dans lequel ledit mappage comprend les étapes de bourrage avec des données fixes.

2. Procédé selon la revendication 1, dans lequel le premier débit comprend un débit choisi parmi SONET, Gigabit Ethernet, OC-3, OC-12 et OC-48.

3. Procédé selon la revendication 2, dans lequel le deuxième débit est inférieur au premier débit.

4. Procédé selon la revendication 1, comprenant en outre :
un démultiplexage pour désérialiser les données reçues au premier débit ; et
un multiplexage pour sérialiser les données transmises au deuxième débit.

5. Procédé selon la revendication 1, comprenant en outre :
la génération de trames comprenant lesdites données.

6. Procédé selon la revendication 1, comprenant en outre :
l'adaptation d'un premier protocole ou format desdites données à un deuxième protocole ou format utilisé pour un traitement subséquent desdites données.

7. Émetteur-récepteur pour transmettre des données, ledit émetteur-récepteur (120) comprenant :
une première interface (210, 215, 220) pour recevoir des données à un premier débit de données ;
un dispositif de mappage (225) pour mapper lesdites données à un deuxième débit de données ; et une deuxième interface (210, 215, 220) pour transmettre des données mappées au deuxième débit de données,
**caractérisé en ce que**
ledit dispositif de mappage (225) est configuré pour mapper lesdites données d'un parmi une pluralité de premiers débits de données à un parmi une pluralité de deuxièmes débits de données, et
ledit dispositif de mappage (225) est configuré pour bourrer avec des données fixes.

8. Émetteur-récepteur selon la revendication 7, comprenant en outre :
un trameur (105, 228a, 228b) pour générer des trames comprenant lesdites données qui sont délivrées au dispositif de mappage (225).

9. Émetteur-récepteur selon la revendication 7, comprenant en outre :
un démultiplexeur (240) pour désérialiser les données reçues au premier débit ; et
un multiplexeur (235) pour sérialiser les données transmises au deuxième débit.

10. Émetteur-récepteur selon la revendication 7, dans lequel le premier débit comprend un débit choisi parmi SONET, Gigabit Ethernet, OC-3, OC-12 et OC-48.

11. Émetteur-récepteur selon la revendication 7, dans lequel
une première interface (210, 215, 220) recevant des données à un premier débit de données ;
ledit dispositif de mappage (225) est connecté à la première interface (210, 215, 220), et
le dispositif de mappage (225) mappe lesdites données audit deuxième débit de données.

12. Émetteur-récepteur selon la revendication 7, dans lequel ladite deuxième interface (210, 215, 220) est connectée au dispositif de mappage (225), et
la deuxième interface (210, 215, 220) transmet des données mappées au deuxième débit de données.

13. Émetteur-récepteur selon la revendication 7, dans lequel ledit démultiplexeur (240) est connecté à la première interface (210, 215, 220) ; et
ledit multiplexeur (235) est connecté à la deuxième interface (210, 215, 220).

14. Émetteur-récepteur selon la revendication 7, dans lequel ledit dispositif de mappage (225) est configuré pour adapter un premier protocole ou format desdites données reçues à un deuxième protocole ou format utilisé pour un traitement subséquent desdites données.
